# EUROPEAN PATENT APPLICATION

(11) **EP 3 885 900 A1**
(43) Date of publication of application: **29.09.2021**
(21) Application number: 20165522.2
(22) Date of filing: 25.03.2020
(51) Int. Cl.: G06F 8/656, G06F 9/445

(54) **SYSTEM AND METHOD FOR MANAGING APPLICATIONS HOSTED ON A COMPUTING PLATFORM**

(71) Applicant: Siemens Aktiengesellschaft, 80333 München (DE)
(72) Inventor: Gutermann, Jochen, 76185 Karlsruhe (DE); Eßlinger, Gabriel, 75045 Walzbachtal (DE); Lukiyanov, Dmitry, 76187 Karlsruhe (DE); Maatouki, Ahmad, 76149 Karlsruhe (DE); Mittnacht, Sebastian, 76187 Karlsruhe (DE); Paskaran, Dinesh, 76359 Marxzell (DE)

(57) **Abstract**

System and method for managing at least one application (132) hosted on a computing platform (130, 144) is disclosed. The method comprising enabling integration of a pluggable module (202) with the application (132) using a modular interface (310), wherein the application (132) is associated with condition, performance and maintenance of assets (142) in an automation environment (140), wherein the pluggable module (202) is configured to display asset data associated with the assets (142), and wherein the modular interface (310) enables communication between the pluggable module (202) and the hosted application (132); and managing communication between the application (132) and the pluggable module (202), irrespective of the updates to at least on of the pluggable module (202) and the hosted application, using a secondary interface (330) of the modular interface (310).

## Description

The present invention relates to system and method for managing applications hosted on a computing platform. Particularly, the present invention relates to applications associated with assets in an automation environment.

Applications hosted on a computing platform, such as an extendable web application provides pluggable modules or plugins. The plugins may be built-in the application. In some situations, external users may integrate plugins to the application. The plugins enable display of information associated with the applications or the assets that are linked to the applications. For example, the plugins may be used to display configuration options of the assets. The plugins may be configured to display information with varied granularity.

The plugins and the applications interact using a plugin interface to reflect user actions on the assets and vice versa. A plugin interface is available for plugin development that handles the interaction with applications. Further, the plugins and/or the applications may be updated by a developer/maintainer to enable new actions. Typically, the updates may require publication of a new version of the plugin interface.

Accordingly, there exists a need to enable plugins to make use of new features irrespective of updates to the plugin and/or the application.

In an example, a method for managing at least one application hosted on a computing platform is disclosed. The method comprising enabling integration of a pluggable module with the application using a modular interface, wherein the application is associated with condition, performance and maintenance of assets in an automation environment, wherein the pluggable module is configured to display asset data associated with the assets, and wherein the modular interface enables communication between the pluggable module and the hosted application; and managing communication between the application and the pluggable module, irrespective of the updates to the at least one of pluggable module and the hosted application, using a secondary interface of the modular interface.

In another example, a system for managing at least one application hosted on a computing platform is disclosed. The application is associated with condition, performance and maintenance of assets in an automation environment, the system comprising at least one processor; a memory unit configured to store computer readable instructions executed by the processor, the memory comprising: an interface module configured to generate a modular interface between a pluggable module and the application, wherein the pluggable module is configured to display asset data associated with the assets, and wherein the modular interface enables communication between the pluggable module and the hosted application; an interface extension module configured to enable communication between the application and the pluggable module, irrespective of the updates the at least one of pluggable module and the hosted application.

Through the modular interface, the method and system advantageously overcome the necessity of the plugin interface to be published in order to enable plugins to support a new feature, such as a new parameter or a new version.

A further example may include a non-transitory computer readable medium encoded with executable instructions (such as a software component on a storage device) that when executed, causes at least one processor to carry out this described method.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "application" refers to software code that is used to perform a function using data from the automation environment. For example, the application is a web-based condition monitoring application configured to monitor condition of the assets in the automation environment. Most applications consist of multiple services that in combination are accessible through a plugin or a pluggable module (referred interchangeably). The application maybe configured to monitor and display condition and/or performance of the assets during operation via the pluggable module. Further, the application may be configured to control the assets based on inputs from the pluggable module. In another example, a developer may access the pluggable module via the condition monitoring application.

The term "automation environment" refers to a cyber physical environment such as a factory environment that is controllable remotely via the computing platform. Other automation environments may include a building automation environment, a laboratory automation environment, a manufacturing automation environment or a hospital environment.

As used herein "modular interface" refers to a plugin interface proposed by this invention to support updates to the pluggable module during the runtime of the application. The modular interface includes a primary interface and the secondary interface. As used herein the primary interface is comparable to the existing plugin interfaces. The present invention proposes the modular interface that enhances/extends the primary interface with the secondary interface. The modular interface may be configured to enable communication by the application actions taken in relation to the assets to the pluggable module and/or enable communication by the pluggable module actions taken and/or to take in relation to the assets to the application.

The present invention advantageously discloses integration of a pluggable module with an application using a modular interface. The modular interface is adaptable to the changes/updates in the pluggable module and also the application. The adaptability is enabled using the secondary interface that is configured based on the updates. This flexibility in the modular interface avoids the effort of implementing a new version of the plugin (i.e. pluggable module) for each update. Furthermore, external users can customize the plugin without updating the primary interface.

The method may comprise enabling communication without updating the primary interface of the modular interface. The primary interface may be referred to as a generic interface. The primary interface may be configured to initialize the pluggable module/plugin on the application. The primary interface may be required for initializing the plugin on the application and for exchanging standard parameters. The secondary interface is thereafter generated to support updates to the plugin. For example, the plugin is updated to monitor a new parameter, in addition to the standard parameters, in a condition monitoring application. The application supports the new parameter which is updated. The advantage of the secondary interface is that the plugin may exchange the new parameter which the primary interface does not support, but the application does. Therefore, the present invention advantageously separates the exchange of standard parameters supported by the version of the modular interface in place and parameters added thereafter to enable flexible communication between the application and the plugin.

In an embodiment of the present invention, the method may comprise generating the secondary interface of the modular interface dynamically based on the implementation of the pluggable module. The secondary interface is configured to support communication between the application and the pluggable module. The present invention advantageously enables a plugin developer to define metadata for custom/new parameters during development time. The metadata is interpreted, and the primary interface is enhanced with the secondary interface accordingly.
Therefore, the plugin developer can take advantage of the parameters that are already supported by the application. Further, the present invention advantageously enables communication with the plugin/pluggable module by using parameters of the application's updated plugin in the generation of the secondary interface, even during run-time.

In an embodiment, the parameters of the updated plugin may be termed as metadata that are customizable by the plugin developer. The method may comprise generating the secondary interface based on the customizable metadata. Accordingly, the method may include analyzing the customizable metadata to generate the configuration parameters of the secondary interface.

For example, the customizable metadata includes the direction of communication i.e. from the application to the plugin or from the plugin to the application or both. Another example of the metadata is the parameter's data type in programming language, such as String, Integer, Boolean, Array or Object. Further example of the metadata may be the information as asset data or control data. Furthermore, semantic-type of data can also indicate the type of asset data for example sensor value of 800°C and sensor parameter being temperature. Other example of metadata includes information regarding validation of the transmitted data, i.e. whether the data transmitted is validated and if yes the validation technique. For example, validation would be a function or logical expression that validates the transmitted data. For example, validation refers to verification of valid string of data without unallowed characters.

The method may comprise receiving the updates to the pluggable module on the computing platform. The updates may include new data type that is recognized or analyzable by the application. As indicated above, the updates are used to determine configuration parameters of the secondary interface. In an embodiment, the modular interface is extended with the secondary interface based on the configuration parameters. Further, the secondary interface may be generated during runtime of the application based on the configuration parameters. The present invention advantageously ensures that new data types or updates in the plugin are incorporated even when the application is running.

The system used to perform the above method may include an update module configured to determine configuration parameters of the secondary interface whereby the secondary interface is generated during runtime by the interface extension module based on the configuration parameters. To determine the configuration parameters of the secondary interface, the update module may be configured to generate the customizable metadata.

As used herein above, the computing platform may be implemented via cloud computing and/or fog computing. "Cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

As used herein, "fog computing" refers to a network of edge devices in a facility that may act as a gateway to the cloud computing platform. The edge devices may be light weight, low cost devices which collect data from various sensors and actuators deployed in a plant, store and buffer the collected data, conduct analysis of the collected data, and perform an action (e.g., issuing a control command) based on the outcome of analysis.

The present invention advantageously provides that the plugin interface is able to provide a generic interface communication (i.e. the primary interface) through which, plugins can use a new feature, without any need for another version of the primary interface. Accordingly, the plugin is enabled to generate the extension (i.e. secondary interface) of the plugin interface dynamically during runtime (based on user input or data). Therefore, a new version to the primary interface to support the new feature is not necessary.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a system for managing an application hosted on a computing platform, according to an embodiment of the present invention;
- Fig. 2: illustrates a graphical interface of a modular interface, according to an embodiment of the present invention;
- Fig. 3: illustrates operation of the system in Fig. 1, according to an embodiment of the present invention; and
- Fig. 4: illustrates a flow diagram of an example methodology of managing applications hosted on a computing platform, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

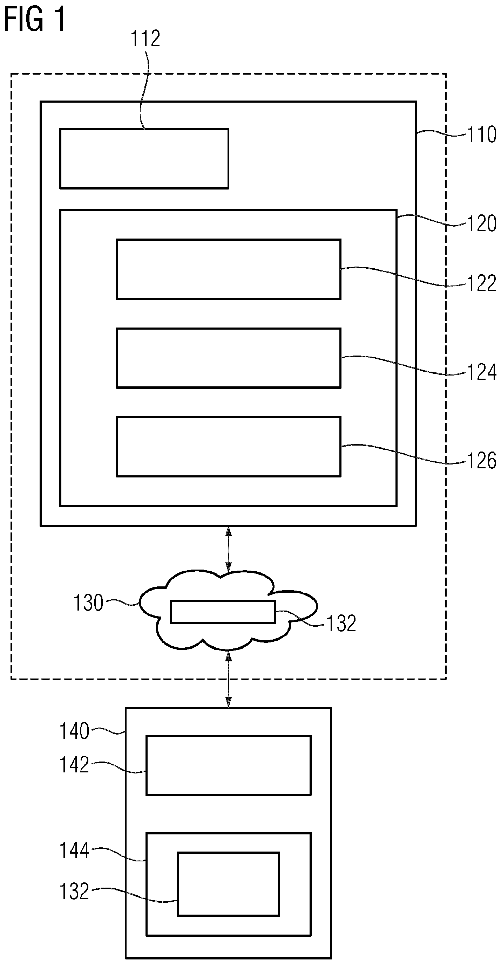

Fig. 1 illustrates a system 110 for managing an application 132 hosted on a cloud computing platform 130 or a fog computing platform 144, according to an embodiment of the present invention. The system 110 includes a processor 112 that is used to execute instructions in a memory 120 of the system 110. The memory 120 includes an interface module 122, an update module 124 and an interface extension module 126.

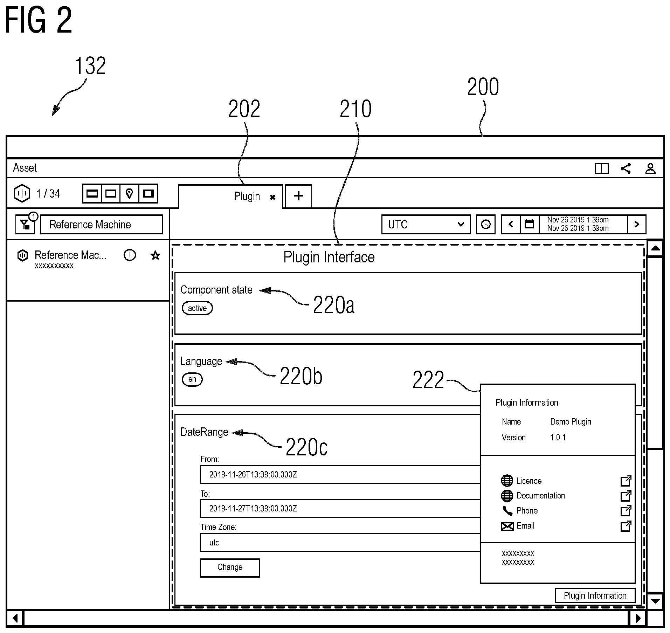

The application 132 may be a condition monitoring application configured to monitor condition of assets 142 in the automation environment 140. The application maybe configured to monitor and display condition and/or performance of the assets during operation using a pluggable module. The pluggable module is illustrated using a Graphical User Interface (GUI) in FIG. 2. The pluggable module may be executed on the system 110 or another device communicatively coupled to the system 110.

The assets 142 include control devices, sensors, actuators and edge devices. The edge devices are used to enable communication between the assets 142 and are also configured to enable asset condition monitoring within the automation environment 140. The edge devices form the fog computing platform 144 which is able to perform at least a part of the asset condition monitoring using the application 132.

The system 110 communicates with the application 132 via the cloud computing platform 130. In an embodiment, the cloud computing platform 130 may facilitate connectivity to the fog computing platform 144 that hosts the application 132.

The system 110 enables effective communication between the pluggable module and the application 132 by executing the modules 122, 124 and 126 in the memory 120. The interface module 124 is configured to generate a modular interface to enable the pluggable module (i.e. plugin) to be integrated to the application 132. The application 132 may provide built-in plugins. In other embodiments, the application 132 may enable external users to integrate new "non built-in" plugins. The new plugins typically display information or configuration options for a selected asset that may not be supported with an initial version of the modular interface. Accordingly, the present invention advantageously provides for a primary interface and a secondary interface.

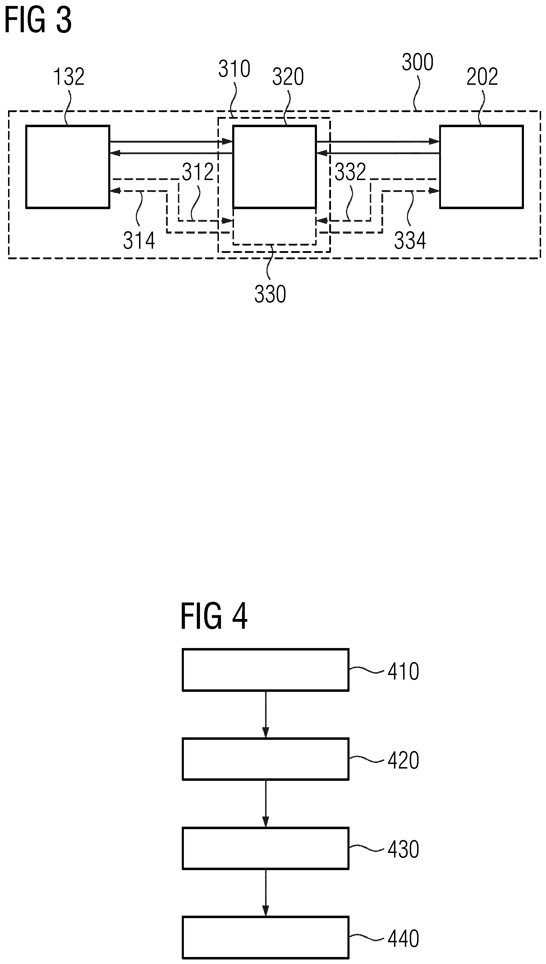

During initialization of the application 132, the pluggable module is initialized using the primary interface generated by the interface module 122. The primary interface is configured to support interaction between the plugin and the application for standard parameters. A plugin developer may define metadata for custom parameters during development. The metadata is interpreted and the primary interface is extended accordingly.
During runtime of the application 132, it may be desirable to have changes in the pluggable module. These changes are supported by the secondary interface. The primary interface and the secondary interface are collectively referred to as a modular interface. The modular interface is illustrated in FIG. 3.

To enable the interface module 122 to generate the secondary interface the update module 124 and the interface extension module 126 are executed. The update module 124 configured to determine configuration parameters of the secondary interface. Therefore, the update module 124 is configured to interpret the metadata for custom parameters to determine the configuration parameters of the secondary interface. When the configuration parameters are determined the interface extension module 126 enables generation of the secondary interface during runtime of the application 132 based on the configuration parameters.

In an embodiment, the update module 124 is configured to use metadata from the user to generate the configuration parameters of the secondary interface. The customizable metadata include communication direction between the application and the pluggable module, type of data transmitted and validation of the transmitted data, wherein the type of data transmitted comprises type of asset data.

Accordingly, the system 110 is configured to integrate third-party plugins into the application 132. Further, the system 110 provides an interface to communicate with application 132 via the modular interface. This enables the application 132 to inform the plugin about actions associated with assets 142 (vice versa). FIG. 2 illustrates how the modular interface may be used via a GUI 200.

Fig. 2 illustrates a GUI 200 of an application 132, including a plugin GUI 210, according to an embodiment of the present invention. The GUI 200 illustrates the pluggable module/plugin 202 that may be used to control and configure the assets 142. The modular interface 210 is represented using the plugin GUI 210. The plugin GUI 210 includes a component state 220a, a language field 220b and a date and time range 220c. Further, information regarding the plugin 202 is indicated in the plugin GUI 210 using an information field 222. Additional plugin information may be defined using the GUI 210. The plugin information 222 displays the plugin name, copyright information, links and provider information. The plugin information 222 also indicates the type of user that has provisioned the plugin 202.

When the application 132 is initialized the GUI 210 is configured with the fields 220a, 220b and 220c in a default setting. During the runtime of the application the GUI 210 may be used to change the parameters in the fields 220a, 220b, 220c. For example, in case the language of the plugin 202 is modified to support an additional language such as Chinese, the update is then used to configure the secondary interface that will enable communication between the application GUI200 and the plugin 202.

Fig. 3 illustrates operation 300 of the system 110, according to an embodiment of the present invention. The application 132 and the plugin 202 are able to communicate with each other using the modular interface 310. The modular interface 310 includes the primary interface 320 that may be predefined by a software development kit. The modular interface 310 also provides a generic extendable interface though the secondary interface 330.

The communication lines 312, 314, 332 and 334 indicate the new communication support provided by the modular interface 310 to allow for configuring or customizing the plugin 202. In an embodiment, the new configuration of the plugin 202 is received as metadata such as data type, new language etc. The metadata is interpreted to enhance the logic of the modular interface 310. The enhanced logic is implemented by the secondary interface 330. Accordingly, the secondary interface 330 enables end users to extend the interface during runtime.

Fig. 4 illustrates a flow diagram of an example methodology of managing applications hosted on a computing platform, according to an embodiment of the present invention.

The method begins at step 410 by enable integration of a pluggable module with an application associated with assets in an automation environment using a modular interface. The modular interface enables third-party providers to integrate external pluggable modules that may not be generally supported by the application. The pluggable modules display information or configuration options for a selected asset. The interface is modular as is generic and is extendable to support updates or changes to the pluggable module and/or the application.

At step 420 updates to the pluggable module are received. the plugin developer defines the metadata for custom parameters during development time. The metadata is interpreted, and the interface is enhanced accordingly. The metadata may act as configuration parameters for the extension of the modular interface. In another example, the updates may be received via a GUI on which customer preferences are input. The customer preferences are analyzed to generate customized metadata.

At step 430 a secondary interface of the modular interface is generated as an extension to the modular interface. The secondary interface is generated dynamically in runtime of the application using the customized metadata.

At step 440 communication between the application and the pluggable module is managed and enabled irrespective of the custom parameters using the secondary interface. The modular interface is material to the communication between the application and the pluggable module. Therefore, in case of updates the secondary interface enables that communication without impacting the running of the application.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method for managing at least one application (132) hosted on a computing platform (130, 144), the method comprising:
enabling integration of a pluggable module (202) with the application (132) using a modular interface (310), wherein the application (132) is associated with condition, performance and maintenance of assets (142) in an automation environment (140), wherein the pluggable module (202) is configured to display asset data associated with the assets (142), and wherein the modular interface (310) enables communication between the pluggable module (202) and the hosted application (132); and
managing communication between the application (132) and the pluggable module (202), irrespective of the updates to the at least one of pluggable module (202) and the host application , using a secondary interface (330) of the modular interface (310).

2. The method according to claim 1, wherein enabling integration of a pluggable module (202) with the application (132) using a modular interface (310) comprises:
generating the secondary interface (330) of the modular interface (310) dynamically based on the updates to the pluggable module (202), whereby the secondary interface (330) is configured to support communication between the application (132) and the updated pluggable module (202).

3. The method according to one of the preceding claims, further comprising:
receiving the updates to the pluggable module (202), wherein the updates determine configuration parameters of the secondary interface (330); and
generating the secondary interface (330) during runtime of the application (132) based on the configuration parameters.

4. The method according to one of the preceding claims, further comprising:
generating the secondary interface (330) based on customizable metadata comprising at least one communication direction between the application (132) and the pluggable module (202), type of data transmitted and validation of the transmitted data, wherein the type of data transmitted comprises type of asset data.

5. The method according to one of the preceding claims, wherein managing communication between the application (132) and the pluggable module (202) irrespective of the updates to the pluggable module (202) using the secondary interface (330) comprises:
analyzing the customizable metadata to generate the configuration parameters of the secondary interface (330); and
extending the modular interface (310) with the secondary interface (330) based on the configuration parameters.

6. The method according to one of the preceding claims, further comprising:
communicating by the application (132) actions taken in relation to the assets (142) to the pluggable module (202); and/or
communicating by the pluggable module (202) actions taken and/or to take in relation to the assets (142) to the application (132).

7. The method according to one of the preceding claims, wherein the communication is managed without updating a primary interface of the modular interface (310), wherein the primary interface is configured to initialize the pluggable module (202) on the application (132).

8. The method according to one of the preceding claims, wherein the application (132) is a web-based condition monitoring application (132) configured to monitor condition of the assets (142).

9. A system for managing at least one application (132) hosted on a computing platform (130, 144), wherein the application (132) is associated with condition, performance and maintenance of assets (142) in an automation environment (140), the system comprising:
at least one processor (112);
a memory unit (120) configured to store computer readable instructions executed by the processor, the memory comprising:
an interface module (122) configured to generate a modular interface (310) between a pluggable module (202) and the application (132), wherein the pluggable module (202) is configured to display asset data associated with the assets (142), and wherein the modular interface (310) enables communication between the pluggable module (202) and the hosted application (132);
an interface extension module (126) configured to enable communication between the application (132) and the pluggable module (202), irrespective of the updates to at least one of the pluggable module (202) and the hosted application.

10. The system according to claim 9, wherein the modular interface (310) comprises a secondary interface (330) generated by the interface extension module dynamically based on the updates to the pluggable module (202).

11. The system according to one of claims 9 and 10, wherein the memory comprises:
an update module (124) configured to determine configuration parameters of the secondary interface (330) whereby the secondary interface (330) is generated during runtime of the application (132) by the interface extension module based on the configuration parameters.

12. The system according to claim 11, wherein the update module is configured to generate customizable metadata based on at least one of one a communication direction between the application (132) and the pluggable module (202), type of data transmitted and validation of the transmitted data, wherein the type of data transmitted comprises type of asset data.

13. The system according to one of claims 9 to 12, wherein the memory comprises:
the application (132) configured to monitor at least one of condition and performance of the assets (142) during operation, wherein the application (132) is configured to control the assets (142) based on inputs from the pluggable module (202).

14. A computer readable medium encoded with executable instructions that when executed, cause at least one processor to carry out the method as claimed in at least one of the claims 1-8.
